# EUROPEAN PATENT SPECIFICATION

(11) **EP 2 818 570 B1**
(45) Date of publication and mention of the grant of the patent: **28.11.2018**
(21) Application number: 13751719.9
(22) Date of filing: 20.02.2013
(51) Int. Cl.: C22C 38/08, H01F 1/20, B22F 9/30, C22C 19/03, H01F 1/00, B82Y 25/00, B82Y 30/00, B82Y 40/00, H01M 4/90, H01M 4/96

(54) **GRAPHITIZED MATRIX NANOCOMPOSITES AND METAL NANOPARTICLES WITH SUPERCAPACITANCE AND MAGNETORESISTANCE PROPERTIES AND THEIR PRODUCTION PROCESS**
GRAPHITIERTE MATRIXNANOKOMPOSITE UND METALLNANOPARTIKEL MIT SUPERKAPAZITÄT UND MAGNETWIDERSTANDSEIGENSCHAFTEN UND IHR PRODUKTIONSPROZESS
NANOCOMPOSITES À MATRICE GRAPHITISÉE ET NANOPARTICULES MÉTALLIQUES À PROPRIÉTÉS DE SUPERCAPACITÉ ET MAGNÉTORÉSISTANCE ET LEUR PROCESSUS DE PRODUCTION

(30) Priority: 23.02.2012 ES 201200188
(43) Date of publication of application: 31.12.2014
(73) Proprietor: Universitat de Valéncia, 46010 Valencia (ES)
(72) Inventor: CORONADO MIRALLES, Eugenio, E-46540 El Puig (Valencia) (ES); RIBERA HERMANO, Antonio, E-46419 Sueca (Valencia) (ES); ABELLÁN SÁEZ, Gonzalo, E-46009 Valencia (Valencia) (ES)
(74) Representative: Pons
(86) International application number: PCT/ES2013/000050
(87) International publication number: WO 2013/124503

(56) References cited:
- XU M H ET AL: "Highly stable FeNi alloy nanoparticles encapsulated in carbon nanotubes: Synthesis, structure and magnetic properties", JOURNAL OF ALLOYS AND COMPOUNDS, ELSEVIER SEQUOIA, LAUSANNE, CH, vol. 495, no. 1, 2 February 2010 (2010-02-02), pages 200-204, XP026977737, ISSN: 0925-8388 [retrieved on 2010-02-02]
- STIMPFLING T ET AL: "Carbon composites and replicas from intercalated layered double hydroxides", APPLIED CLAY SCIENCE, ELSEVIER SCIENCE, NL, vol. 50, no. 3, 16 September 2010 (2010-09-16), pages 367-375, XP027458938, ISSN: 0169-1317, DOI: 10.1016/J.CLAY.2010.08.030 [retrieved on 2010-11-01]
- GONZALO ABELLÁN ET AL: "Layered double hydroxide (LDH)-organic hybrids as precursors for low-temperature chemical synthesis of carbon nanoforms", CHEMICAL SCIENCE, vol. 3, no. 5, 23 February 2012 (2012-02-23), page 1481, XP055082025, ISSN: 2041-6520, DOI: 10.1039/c2sc01064j
- RUANO-CASERO, R. J. ET AL.: 'Preparation and Properties of Nickel and Iron Oxides obtained by Calcination of Layered Double Hydroxides' Z. ANORG. ALLG. CHEM. vol. 631, 2005, pages 2142 - 2150., XP055162000
- LI, F. ET AL.: 'Synthesis and characterization of Nil-xZnxFe204 spinel ferrites from tailored Layered double hydroxide precursors' MATERIALS RESEARCH BULLETIN vol. 40, no. 8, 2005, pages 1244 - 1255, XP004973492
- ABELLAN, G. ET AL.: 'Hexagonal nanosheets From the exfolation of Ni2+-Fe3+ LDHs: a route Towards layered multifunctional materials' JOURNAL OF MATERIALS CHEMISTRY vol. 20, 2010, pages 7451 - 7455, XP055082023
- ABELLAN, G. ET AL.: 'Layered double hydroxide (LDH)-organic hybrids as precursors for low-temperature chemical synthesis of carbon nanoforms' CHEM.SCI. vol. 3, 2012, pages 1481 - 1485, XP055082025

## Description

The present invention relates to a nanocomposite material comprising a graphitized carbon matrix containing embedded particles of at least one metal in zero oxidation state. These materials have important supercapacitance and magnetoresistance properties. Therefore, the invention can be included in the field of composite materials with applications in energy storage, in electronics and spintronics.

### STATE OR THE ART

From the first patent on electrochemical capacitors in 1957, there have been numerous efforts to optimize the features of this type of devices. Electrochemical capacitors can store hundreds of times more energy per unit of weight and volume than traditional electrolytic capacitors and also have other advantages such as large life cycles, high discharge speeds, wide range of working temperatures, etc. They are therefore candidates to be taken into account in a globalized world with strong energy demand and increasing scarcity of fossil fuels. It was at the start of the 1990s when (super)capacitors began to gain interest, especially to improve the features of electric vehicle batteries, in an attempt to achieve a greater life time of the battery or greater power during acceleration, among other objectives.

Nanocomposites are becoming materials of great interest for applications related to energy storage due to the properties provided by their different constituents. Among the possible nanocomposites which are synthesized, those from layered double hydroxides (LDH) are awaking a particular interest, especially nanocarbon composites and metal oxides due to their potential applications in electrochemical devices.

LDHs or hydrotalcite-like compounds, also known as anionic clays, are a family of compounds that have attracted great attention in the last two decades. The structure of many of these compounds corresponds to hydrotalcite. They have a structure that can be considered derived from brucite, wherein part of the divalent cations have been replaced by trivalent cations generating an excess of positive charge in the layer of hydroxides which is compensated by interlayer anions. The general formula for these structures is: [M^{II}₁₋ₓM^{III}ₓ(OH)₂]^{x+}[A^{m-}_{x/m}nH₂O] where M^{II} and M^{III} represent metal cations (M^{II} = Mg, Zn, Co, Ni, Mn; M^{III} = Al, Cr, Fe, V, Co); and A^{m-} represents the interlayer anion (CO₃²⁻, SO₄²⁻, Cl⁻ , NO₃⁻, organic anions). The value of x to produce pure LDH systems must vary between 0.2 - 0.33.

Some authors (Leroux, F. and Stimpfling, T., Chemistry of Materials. 2010, 22, 974-987, Applied Clay Science, 2010, 50, 367-375) have developed carbon composites with metal oxides (mainly of Co, Al, Ni, Fe and Zn), obtained from the calcination of LDH, which have interesting electrochemical properties. Document US2009/0290287 discloses an asymmetrical supercapacitor with a positive electrode based on a LDH, activated carbon and graphite and a negative electron based on a carbon material with Mo and Li oxides.

There is a rising demand for nanocomposites with supercapacitance properties. The present invention provides a novel nanocomposite with supercapacitance properties which also surprisingly have giant magnetoresistance properties.

### DETAILED DESCRIPTION OF THE INVENTION

The present invention relates to nanocomposites based on graphitized carbon forms wherein metal nanoparticles in zero oxidation state are embedded. Furthermore, it also relates to the preparation process of said nanocomposites, initiated with the synthesis of a layered hydroxide as precursor and the calcination of which in very mild conditions provides a material with optimum properties for the use thereof as supercapacitor.

In consequence, a first aspect of the present invention relates to a nanocomposite comprising:
a) a layered hydroxide based graphitized carbon matrix and
b) nanoparticles of at least one metal in zero oxidation state embedded in said matrix, wherein the metal is selected from Ni, Fe, Co and any alloy thereof.

Unlike that shown in the documents of the state or the art wherein the nanocomposites comprise particles of mixed metal oxides, the metal nanoparticles of the present invention are metal alloys or metals in zero oxidation state, which are embedded in a graphitized carbon matrix. Surprisingly, these metal nanoparticles exercise a catalytic activity on the decomposition of precursor carbon compounds of the matrix, thus facilitating the graphitizing process of said carbon compounds. At the same time, the formation of the graphitized carbon matrix during the calcinations on the nanoparticle surface protects it against possible oxidations.

In a preferred embodiment, the nanoparticles embedded in the graphitized matrix are an alloy of Ni and Fe. In a more preferred embodiment, the metal nanoparticles are the metal alloy FeNi₃. The FeNi₃ nanoparticles have very interesting magnetic properties: they are ferromagnetic with high saturation magnetization values and low coercive fields. These properties are advantageous for their application in magnetoresistance, since they provide the ideal behaviour that these systems require but at room temperature. From the standpoint of the supercapacitance properties, its redox contribution is interesting.

In another preferred embodiment, the size of the metal nanoparticles is less than 15 nm and more preferably less than 5 nm.

The nanocomposite of the present invention is obtained from the calcination of layered hydroxides containing interlayer carbon compounds.

Layered hydroxide, in the present invention, relates to a solid extended with a layered structure formed based on hydroxides of at least one metal, which has an excess positive charge or a lack of negative charge in the layers so that it requires the presence of at least one anion to maintain the electroneutrality of the material and its structure. These hydroxides may be double (LDH, layered double hydroxides) or simple (LSH, layered simple hydroxides). In both cases they are structures formed by octahedrons wherein the centre of the octahedron is occupied by a metal and the vertices of the octahedron are OH groups. These octahedrons share edges so that they give rise to extended layers of hydroxides between which the anions responsible for compensating the charge are located. The presence of interlayer anions is due in the case of a LDH structure to the excess positive charge in the hydroxide layer, whilst in the case of a LSH structure it is due to the lack of OH groups in the hydroxide layers. The final result in both cases is the need to compensate the excess of positive charge with anions which will be located between the hydroxide layers.

In particular, the general formula of the LDH precursors used in the production process of the nanocomposites of the present invention is the following: [M^{II}₁₋ₓM^{III}ₓ(OH)₂]^{x+}[A^{m-}_{x/m} nH₂O] where M^{II} and M^{III} represent metal cations of Co, Ni or Fe, in oxidation state two and three respectively; and A^{m-} represents the interlayer anion (which may be CO₃²⁻, SO₄²⁻, Cl⁻ , NO₃⁻ or organic anions). The value of x to produce pure LDH systems must vary between 0.2 - 0.33.

In the case of LSH, the structures could be represented by the following formulas: M^{II}(OH)₂₋ₓ(A^{m-})_{x/m}, for divalent cations and M^{III}(OH)₃₋ₓ(A^{m-})_{x/m} for trivalent cations, with M^{II} and M^{III} being metal cations of Co, Ni or Fe, in oxidation state two and three respectively and A^{m-} the interlayer anion (which may be CO₃²⁻, SO₄²⁻, Cl⁻, NO₃⁻ or organic anions). Preferably, x has a value between 0.2 and 0.8.

The documents of the state or the art describe that for the production of nanocomposites with supercapacitance properties from a LDH precursor, said precursor must contain Al or Mg. No document shows or suggests a LDH precursor for the production of this type of nanocomposites which does not contain Al or Mg. The inventors have surprisingly used as precursor a layered hydroxide without Al or Mg which makes it possible to produce a nanocomposite with supercapacitance properties.

The production process of the layered hydroxides precursors of the nanocomposite of the invention is a standard process known by any person skilled in the art. The method described by Miyata (Clays and Clay Minerals 1980, 28, 50-56) is suitable for the preparation of layered hydroxides with LDH structure whilst the layered hydroxides with LSH structure can be obtained following the method described by Fogg (Chem. Mater. 2008, 20, 335-340). However, surprisingly, the calcination step of the layered hydroxide in the process of the present invention can be performed in a wide range of temperatures and especially at a temperature around 400°C, therefore, much lower than those used in the processes of the state or the art which are from 500°C (e.g. in the process described in Chem. Mater. 2010, 22, 974-987, it is calcined at 500-600°C). Therefore, the calcination at lower temperatures is a clear advantage of the process of the present invention with respect to that shown in the state of the art.

In consequence, a second aspect of the present invention relates to a production process of the nanocomposite of the present invention, wherein the process comprises the following steps:
a) preparation of a layered hydroxide precursor from Ni salts, Fe salts, Co salts or any combinations thereof and a carbon compound which is selected from among C₁-C₄₀ alkyl and C₅-C₁₈ aryl, which comprise at least one carboxylate group and/or a sulfonate group, wherein said carbon compound is replaced or not by at least one group which is selected from amine, amide, hydroxy, alkoxy, carbonyl, halogen, carboxyl, cyano, acyl, alkoxycarbonyl, niter, mercapto and alkylthio;
b) calcination of the precursor produced in step (a) at a temperature range from 400 to 900°C.

In a preferred embodiment, the layered hydroxide is a layered hydroxide with LDH structure.

In another preferred embodiment, the layered hydroxide is a layered hydroxide with LSH structure.

The choice of the metals which form the nanoparticles has been rationalized bearing in mind their high catalytic capacity in the synthesis of carbon nanoforms. Discrete molecules have been used as interlayer anions: carbon compounds with carboxylate and/or sulfonate groups which act in turn as pillars of the structure and source of carbon for formation of the future matrix. In light of the above, the precursor may be seen as a nanometric-scale reactor wherein the layers of metals act as catalyst of the formation of graphitized carbon due to decomposition of the carbon precursor.

In a preferred embodiment, the calcination of step (b) of the process of the second aspect of the present invention is performed at a temperature of 400°C.

Surprisingly, unlike that expected in accordance with that described in the state of the art in this type of materials, which would be the production of mixed oxides, the thermal decomposition of the precursor at a temperature as low as of 400°C gives rise to the formation of metal nanoparticles with zero oxidation state, the catalytic activity of which facilitates the decomposition of the interlayer anions, growing from the surface thereof as graphitized carbon.

In a preferred embodiment, the carbon compound is a C₄-C₂₀ alkyl comprising at least one carboxylate group and/or a sulfonate group, wherein said carbon compound is substituted or not substituted by at least one group selected from amine, amide, hydroxy, alkoxy, carbonyl, halogen, carboxyl, cyano, acyl, alkoxycarbonyl, nitro, mercapto and alkylthio. More preferably, this C₄-C₂₀ alkyl contains two carboxylate groups. In an even more preferred embodiment, the carbon compound is selected from sebacate (anion of decanedioic acid) and adipate (anion of hexanedioic acid).

In another preferred embodiment, in step (a) of the process of the second aspect of the present invention a salt combination of two metals is used, more preferably a combination of Ni and Fe salts and even more preferably with Ni:Fe stoichiometric ratio selected from between 2:1 to 4:1, and even more preferably 2:1, 3:1 or 4:1. If the ratio between the metals coincides with the ratio of FeNi₃ (i.e. 3:1), the presence of impurities shall be minimized.

The anions of the metal salts used in step (a) described in the previous paragraph may be any that is suitable and known by a person skilled in the art. Preferably, nitrates, chlorides, sulfates and carbonates.

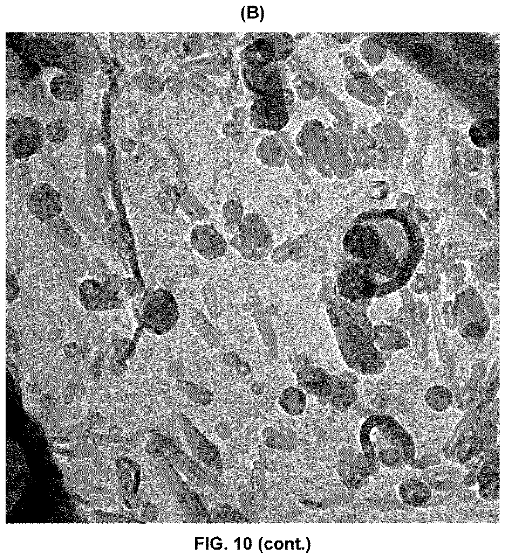

The graphitized matrix of the nanocomposite of the present invention may be isolated by a simple process of acid washing, producing a mixture of carbon nanoforms consisting of carbon nano-onions and multi-layer carbon nanotubes, as is shown in Figure 10B. It is a treatment which allows the elimination of the metal nanoparticles producing a carbon and porous material with many application possibilities for the production of carbon nanoforms.

Therefore, a third aspect of the present invention relates to a process to produce a porous material of graphitized carbon comprising the following steps:
a) production of the nanocomposite according to the process described in the present invention; and
b) acid washing of the nanocomposite produced in step a).

The acid washing can be performed with any acid which has metal leaching capacity such as, but without being limited to, hydrochloric, sulphuric or nitric acid. Preferably, a hydrochloric acid solution is used.

As a consequence of the peculiar arrangement of the metal nanoparticles and the graphitized carbon matrix and the synergy between both, the nanocomposite of the present invention has supercapacitance properties. This property is produced by the coexistence of various factors: the non-Faradaic capacity provided by the carbon matrix, the Faradaic (or redox) capacity provided by the metal nanoparticles, and the distribution and close contact between the matrix and the nanoparticles of the nanocomposite.

An additional and surprising advantage of the nanocomposites of the present invention is that they also have giant magnetoresistance properties (GMR). Said magnetoresistance is derived from the close contact between the embedded nanoparticles of metals which have inherent ferromagnetism and the conductor carbon matrix.

It is well known that alloys containing Fe, Co and/or Ni show GMR properties. The role that the surface spins and the uniformity play are essential for the GMR effect. The production process of nanocomposites described in the present invention makes it possible to obtain uniform materials with a high percentage of surface spins due to the nanometric nature of the magnetic particles it has.

The fact that the nanocomposite of the present invention has supercapacitance properties and additionally, GMR properties, makes it advantageous with respect to other similar materials known for different applications in energy storage, in electronics and in spintronics.

Therefore, a fourth aspect of the present invention relates to the use of the nanocomposite as defined above for applications requiring materials with supercapacitance and/or magnetoresistance properties. Some of these applications may be, without being limited to, inductor, electronic device, storage support, giant magnetoresistant sensor, drug-delivery agents, electrochemical cells and nanoreactors.

A last aspect of the invention relates to an electrical or electronic component comprising the nanocomposite of the present invention, understanding component to be an element forming part of an electronic circuit (for the sending of information) or electrical circuit (for electricity passage control). These components are designed to be connected to other components and thus form said circuits. Non-limiting examples of electrical components are capacitors, resistors, condensers, coils or inductors. Non-limiting examples of electronic components are transistors, operational amplifiers, silicon-controlled rectifiers (SCR) or triodes for alternating current (TRIACs).

### Definitions:

"Nanocomposite", in the present invention, relates to a multi-phase solid material which has a voluminous matrix and one or more nanodimensional phases (less than 100 nanometres) with different chemical and/or structural properties.

"Graphitized" in the present invention, relates to a material rich in carbon the initial structure of which has totally derived to a graphite structure, which is an allotropic form of carbon wherein the carbon atoms have sp² hybridization which means that it forms three covalent bonds in the same plane at an angle of 120° (hexagonal structure) and that an orbital π perpendicular to that plane remains free. These delocalized orbitals π are what give electrical properties to the graphite.

"Alkyl", in the present invention, relates to hydrocarbon chains, whether linear or branched, which have from 1 to 40 carbon atoms, which are bound to the rest of the molecule by a single bond. The alkyl groups may be optionally substituted by one or more substituents such as amine, amide, hydroxy, alkoxy, carbonyl, halogen, carboxyl, cyano, acyl, alkoxycarbonyl, nitro, mercapto and alkylthio.

"Aryl" relates, in the present invention, to simple or multiple aromatic rings, which have from 5 to 24 units wherein a proton has been eliminated from the ring. The aryl groups are, for example, but without being limited to, phenyl, naphthyl, diphenyl, indenyl, phenanthryl or anthracyle. The aryl groups may be optionally substituted by one or more substituents such as amine, amide, hydroxy, alkoxy, carbonyl, halogen, carboxyl, cyano, acyl, alkoxycarbonyl, nitro, mercapto and alkylthio.

"Capacitance" relates, in the present invention, to the capacity of a capacitor (also called condenser) to store energy within an electric field. When the capacitance is in the order of 100,000 times greater than that of traditional capacitors, it is called supercapacitance.

"Giant magnetoresistance" relates, in the present invention, to a mechanical-quantum phenomenon which occurs in materials with fine-layered structures composed of alternating ferromagnetic and non-ferromagnetic and/or magnetic granular materials. In these materials it is possible to drastically modify the electrical resistance by the application of an external magnetic field.

Throughout the description and the claims the word "comprises" and its variants are not intended to exclude other technical characteristics, additives, components or steps. For persons skilled in the art, other objects, advantages and characteristics of the invention will be inferred in part from the description and in part from the practice of the invention. The following figures and examples are provided by way of illustration, and are not intended to limit the present invention.

### BRIEF DESCRIPTION OF THE DRAWINGS

**FIG. 1****.** Shows the result of analyzing the structure of the NiFe-sebacate LDH precursor (A) and of the corresponding FeNi₃-carbon nanocomposite with a Ni:Fe stoichiometric ratio of 2:1 produced by calcination at 400°C (B) by X-ray diffraction (XRD).
**FIG. 2****.** Shows the X-ray diffraction pattern of the FeNi₃-carbon nanocomposite prepared from Ni and Fe salts with a Ni:Fe stoichiometric ratio of 4:1 (x=0.20) wherein it is observed the evolution of the crystallinity of the FeNi₃ nanoparticles in accordance with the calcination temperature.
**FIG. 3****.** Shows the X-ray diffraction pattern of the FeNi₃-carbon nanocomposite prepared from Ni and Fe salts with a Ni:Fe stoichiometric ratio of 3:1 (x=0.25) wherein it is observed the evolution of the crystallinity of the FeNi₃ nanoparticles in accordance with the calcination temperature.
**FIG. 4****.** Shows the X-ray diffraction pattern of the FeNi₃-carbon nanocomposite prepared from Ni and Fe salts with a Ni:Fe stoichiometric ratio of 2:1 (x=0.33) wherein it is observed the evolution of the crystallinity of the FeNi₃ nanoparticles in accordance with the calcination temperature.
**FIG. 5****.** Shows the result of the magnetic measurements of the FeNi₃-carbon nanocomposite synthesized at 400°C (Ni:Fe 2:1) (A) and of the FeNi₃-carbon nanocomposite synthesized at 900°C (Ni:Fe 2:1) (B), performed with a magnetometer at a temperature of 350K and 10K.
**FIG. 6****.** Shows the results of Raman spectroscopy on the FeNi₃-carbon nanocomposite material synthesized at 400°C (Ni:Fe 2:1) and on the porous carbon matrix produced after the acid washing of this nanocomposite.
**FIG. 7****.** Shows the porosity of the FeNi₃-carbon nanocomposite material synthesized at 400°C (Ni:Fe 2:1) and of the porous carbon matrix produced after the acid washing of this nanocomposite, studied using isotherms of nitrogen at 77 K.
**FIG. 8**. Shows the results of the pore size distribution study of the FeNi₃-carbon nanocomposite synthesized at 400°C (Ni:Fe 2:1) and of the porous carbon matrix produced after the acid washing of this nanocomposite.
**FIG 9****.** Shows the photographs obtained by scanning electron microscope of the FeNi₃-carbon nanocomposite synthesized at 400°C (Ni:Fe 2:1) (A) and of the porous carbon matrix produced after the acid washing of this nanocomposite (B).
**FIG 10**. Shows the photographs obtained by the use of high-resolution transmission electron microscopy of the FeNi₃-carbon nanocomposite synthesized at 400°C (Ni:Fe 2:1) (A) of the formation of nanoforms in the porous carbon matrix produced after the acid washing of this nanocomposite (B). It also shows the detail of several nano-onions (C) and the enlarged detail of a nano-onion (D) formed.
**FIG. 11****.** Shows the cyclic voltamperometry measurements of the FeNi₃-carbon nanocomposite synthesized at 400°C (Ni:Fe 2:1) at different scanning speeds in the NaNO₃ electrolyte which favours the capacity of the double electric layer (non-Faradaic).
**FIG. 12****.** Shows the cyclic voltamperometry measurements of the FeNi₃-carbon nanocomposite synthesized at 400°C (Ni:Fe 2:1) at different scanning speeds in the KOH electrolyte which favours the redox capacity (Faradaic).
**FIG. 13****.** Shows the cyclic voltamperometry measurements of the porous carbon matrix produced after the acid washing of the FeNi₃-carbon nanocomposite synthesized at 400°C (Ni:Fe 2:1) at different scanning speeds in the KOH electrolyte.

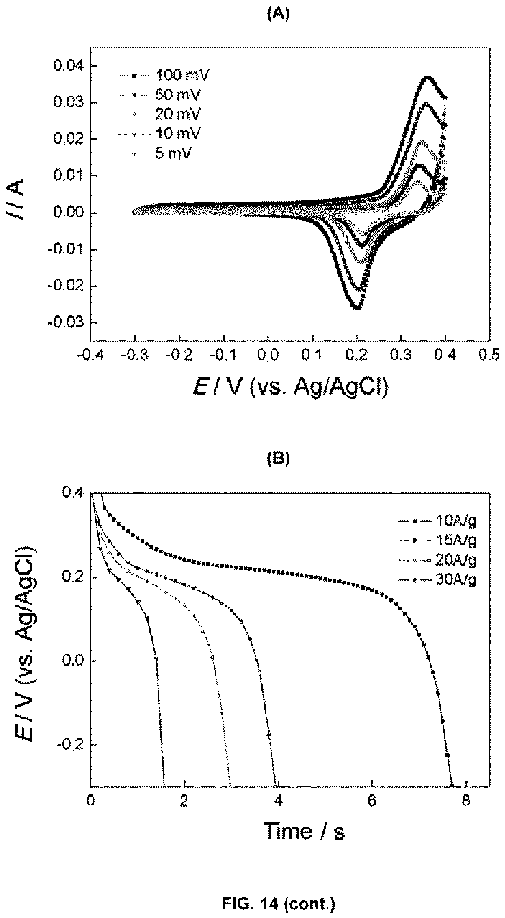

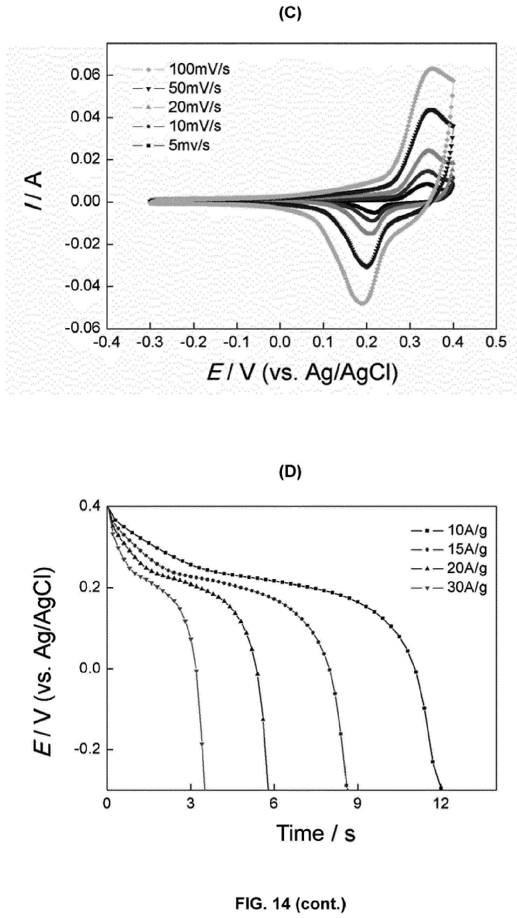

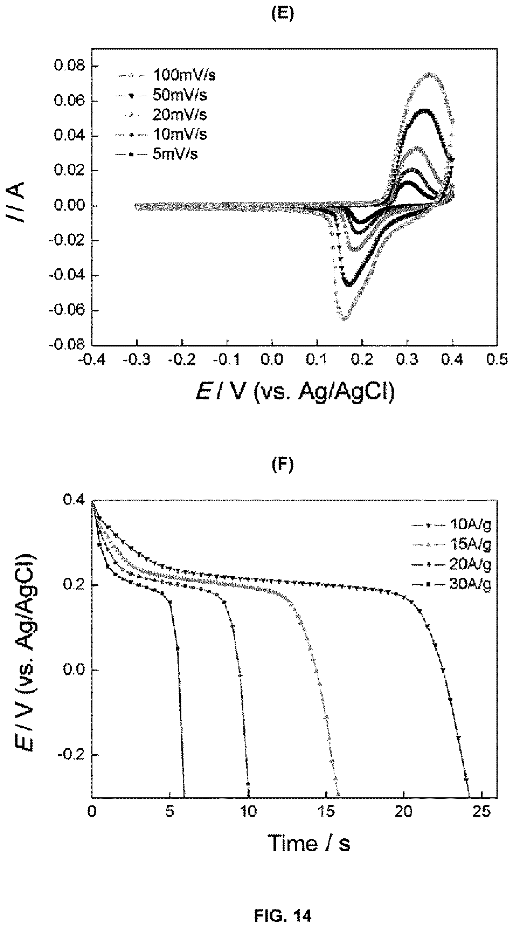

**FIG. 14****.** Shows the cyclic voltamperometry measurements of the FeNi₃-carbon nanocomposite synthesized at 400°C (Ni:Fe 3:1) at different scanning speeds in the KOH electrolyte (A), the corresponding stationary curve of galvanostatic discharge at several discharge current densities in the window of potential of 0.4-0.3 v (vs.. Ag/AgCI) (B), of the FeNi₃-carbon nanocomposite synthesized at 650°C (Ni:Fe 3:1) at different scanning speeds in the KOH electrolyte (C), the corresponding stationary curve of galvanostatic discharge at several discharge current densities in the window of potential of 0.4-0.3 v (vs. Ag/AgCI) (D) and of the FeNi₃-carbon nanocomposite synthesized at 900°C (Ni:Fe 3:1) at different scanning speeds in the KOH electrolyte (E) and the corresponding stationary curve of galvanostatic discharge at several discharge current densities in the window of potential of 0.4-0.3 v (vs. Ag/AgCI) (F).
**FIG. 15****.** Shows the cyclic voltamperometry measurements of the porous carbon matrix produced after the acid washing of the FeNi₃-carbon nanocomposite synthesized at 400°C (Ni:Fe 3:1) at different scanning speeds in the KOH electrolyte (A), the corresponding stationary curve of galvanostatic discharge at several discharge current densities in the window of potential of 0.4-0.3 v (vs. Ag/AgCI) (B).
**FIG. 16****.** Shows the Ragone chart (energy density vs. power density) of the FeNi₃-carbon nanocomposites synthesized at 400, 650 and 900°C (Ni:Fe 3:1) and the porous carbon matrix produced after the acid washing of the FeNi₃-carbon nanocomposite synthesized at 400°C (Ni:Fe 3:1).
**FIG. 17****.** Shows the retention of the capacity against the number of charge and discharge cycles performed at a current density of 20 A/g of the FeNi₃-carbon nanocomposites synthesized at 400, 650 and 900°C (Ni:Fe 3:1) and the porous carbon matrix produced after the acid washing of the FeNi₃-carbon nanocomposite synthesized at 400°C (Ni:Fe 3:1).
**FIG. 18****.** Shows the magnetoresistance measurement of the FeNi₃-carbon nanocomposite synthesized at 400°C (Ni:Fe 2:1) (A), the expansion to low fields of the one synthesized at 400°C (B), of the FeNi₃-carbon nanocomposite synthesized at 900°C (Ni:Fe 2:1) (C) and the expansion to low fields of the one synthesized at 900°C (D).

### EXAMPLES

### Example 1: production of a nanocomposite with graphitized matrix and embedded FeNi₃ nanoparticles from LDH.

Aqueous solutions were prepared of the nickel and iron salts maintaining the stoichiometric coefficient constant x = M^{III} / (M^{II} + M^{III}) for values of x of 0.20, 0.25 and 0.33, and with a total metal concentration constant and equal to 1 M, using distilled water. A second aqueous solution of decanedioic acid and NaOH was prepared using distilled water. Both solutions were mixed drop-by-drop, which gave rise to a gel with pH = 7. Later, it was heated to 80°C under constant stirring and maintaining this temperature during four days at atmospheric pressure. The solid produced was filtered and washed with abundant water and ethanol, and finally vacuum dried at room temperature. The entire process was performed in an inert atmosphere to prevent contamination by atmospheric CO₂ in the final precursor. Additionally, the pH was kept constant to avoid the formation of impurities in the final solid.

The solids produced in the first step (hereinafter NiFe-secabate LDH) were calcined in a nitrogen atmosphere at different temperatures (400, 650 and 900°C) during different periods of time: 3, 6 and 9 hours in a programmable oven with a heating ramp which may be of 1, 5 and 10 °C/min and a nitrogen flow of 40-120 ml/min. For all cases, a powder was obtained, FeNi₃-carbon nanocomposite, in the form of crystalline nanoparticles.

### Example 2: production of a porous carbon matrix from the nanocomposites produced in example 1.

The FeNi₃-carbon nanocomposites produced in example 1 were subjected to acid washing with 2M HCI during 2 hours with magnetic stirring, eliminating the Ni and Fe nanoparticles embedded in the matrix, thus producing a graphitized and porous matrix.

### Example 3: study of the structure and the properties of the nanocomposites and the porous carbon matrix produced.

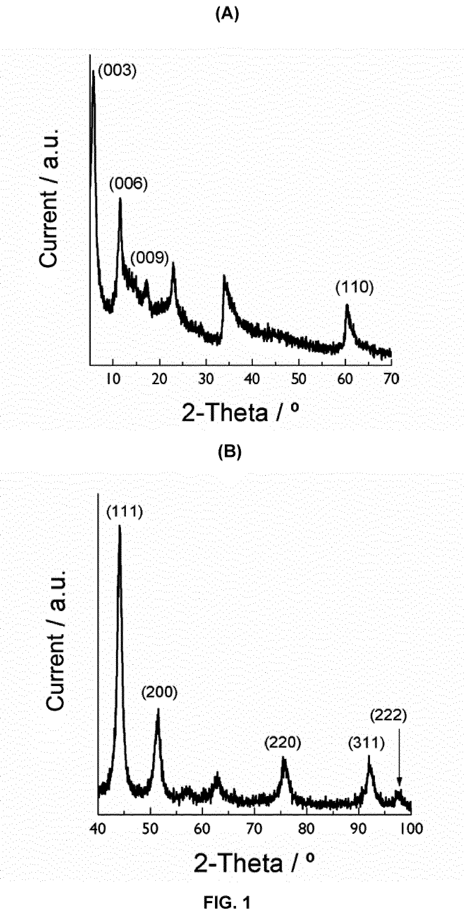

To study the structural changes arising during calcination of the precursor to produce the nanocomposite, an analysis of the structure using X-ray diffraction (XRD) was performed. The diffraction pattern of the NiFe-Sebacate LDH precursor (FIG. 1A) shows the classic profile of a LDH-type material with high intensity diffraction lines at low angles associated with the reflections (00/). From the XRD analysis performed on the FeNi₃-carbon nanocomposite produced after subjecting the precursor to thermal treatment (FIG. 1B), the Miller indices of the peaks were obtained and they were compared with the information in the *Joint Committee on Powder Diffraction Standards* (JCPDS) database. From this comparison, it was deduced that the compound that fits with this XRD is a FeNi₃ alloy with a face-centred cubic crystalline phase (JCPDS 38-0419).

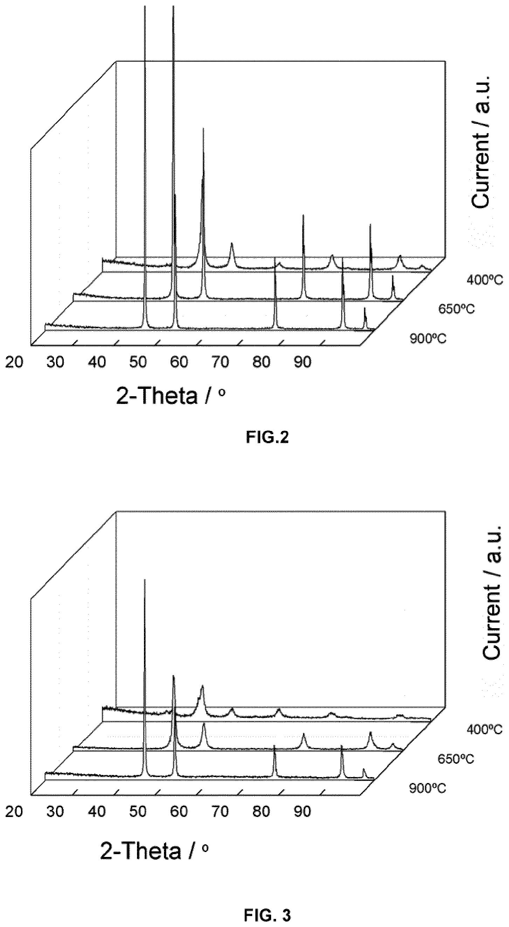

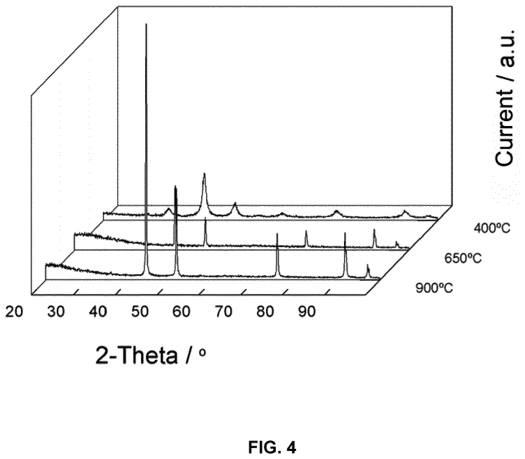

The evolution of the crystallinity of the FeNi₃ nanoparticles in accordance with the calcination temperature for nanocomposites prepared varying the Ni and Fe composition was also observed. In the patterns of X-ray diffraction of nanocomposites with coefficient x=0.20 (FIG. 2), x=0.25 (FIG. 3) and x=0.33 (FIG. 4), it can be observed that peaks are already defined at 400°C, indicating that it is a crystalline material.

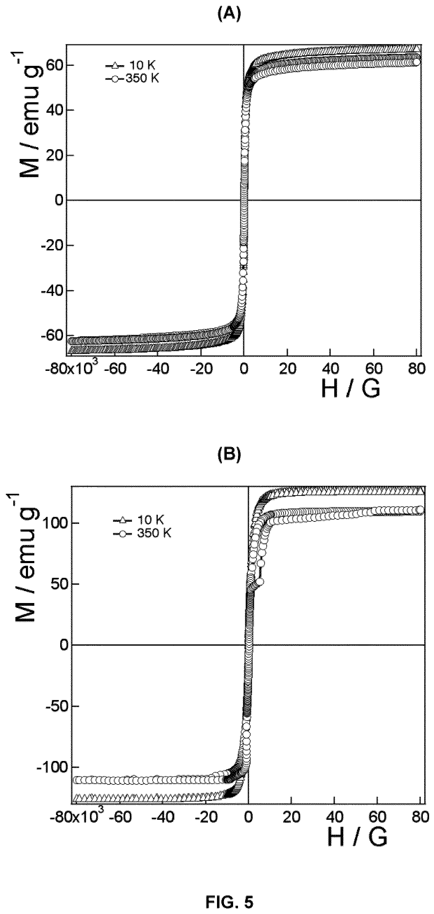

Additionally, the magnetic properties of the nanocomposite related to the presence of FeNi₃ metal nanoparticles were verified. To do this, magnetic measurements were taken at temperatures of 350K and 10K using a magnetometer on the FeNi₃-carbon nanocomposite synthesized at 400°C (Ni:Fe 2:1) (FIG. 5A) and on the FeNi₃-carbon nanocomposite synthesized at 900°C (Ni:Fe 2:1) (FIG. 5B). The nanocomposite synthesized at 400°C has a ferromagnetic behaviour, with the presence of a hysteresis cycle at 350K, with a coercive field of approximately 20 G and a saturation magnetization of 63 emu/g. The nanocomposite synthesized at 900°C has a ferromagnetic behaviour, with the presence of a hysteresis cycle at 350K, with a coercive field of approximately 60 G and a saturation magnetization of 122 emu/g. The same magnetic properties are observed at a temperature of 10K.

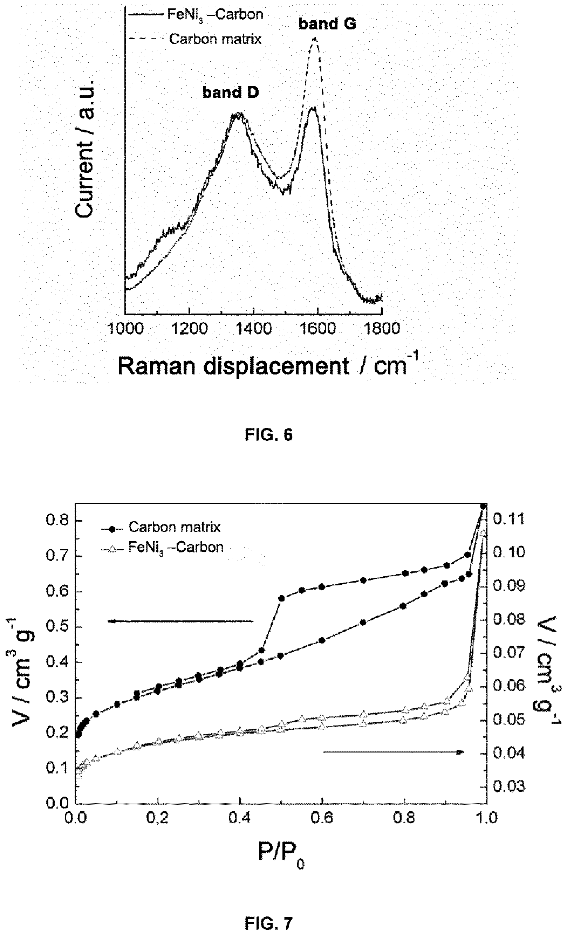

The graphite character of the carbon matrix was studied using Raman spectroscopy, with the nanocomposite showing the presence of the bands characteristic of carbon: G and D centred at 1581 and 1347 cm⁻¹ respectively and the carbon matrix produced after the acid washing bands G and D centred at 1590 and 1368 cm⁻¹ respectively (FIG. 6). The increase in I_{D}/I_{G} ratio with respect to the nanocomposite, suggests an increase in sp² graphitic domains, as well as an increase in the crystallinity of the carbon after acid washing.

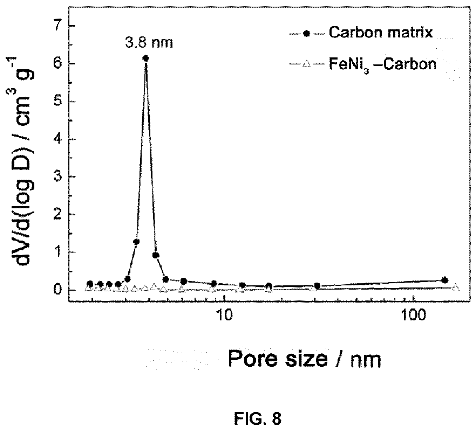

The porosity of the materials produced has been studied using nitrogen isotherms at 77 K (FIG. 7). The results show the presence of microporosity in the initial nanocomposite, and a low surface area. In the case of the carbon matrix produced after the acid washing of the initial nanocomposite, a drastic increase is observed in surface area and pore volume, reaching values of 685 m²/g in the surface area and 0.35 cc/g of mesopore volume. The study of pore size distribution shows that the mesopore size is 3.8 nm (FIG. 8).

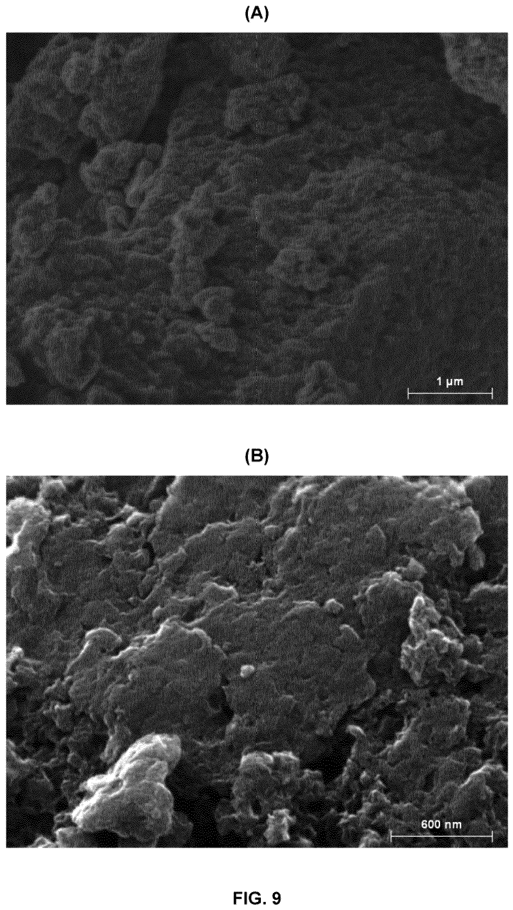

In the structural study of the materials produced, using scanning electron microscope (SEM), it was observed that in the case of the FeNi₃-carbon nanocomposite synthesized at 400 °C (Ni:Fe 2:1) the surface is granulated and no porosity is observed (FIG. 9A), whereas in the case of the carbon matrix, a generalized porous structure is observed (FIG. 9B).

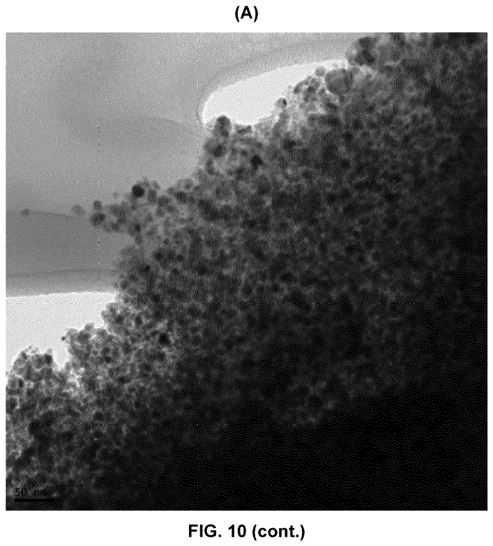

The structure and morphology of the FeNi₃-carbon nanocomposite synthesized at 400°C (Ni:Fe 2:1) consists in a homogeneous dispersion of nanocrystals (less than 15 nm) embedded in a graphitized carbon matrix, as can be observed by the use of high-resolution transmission electron microscopy (HRTEM) shown in FIG. 10A. By observing at greater enlargements, it can be seen that the network distance between two planes is 0.205 nm, which corresponds to the distance that separates the planes (*111*) of the FeNi₃ alloy.

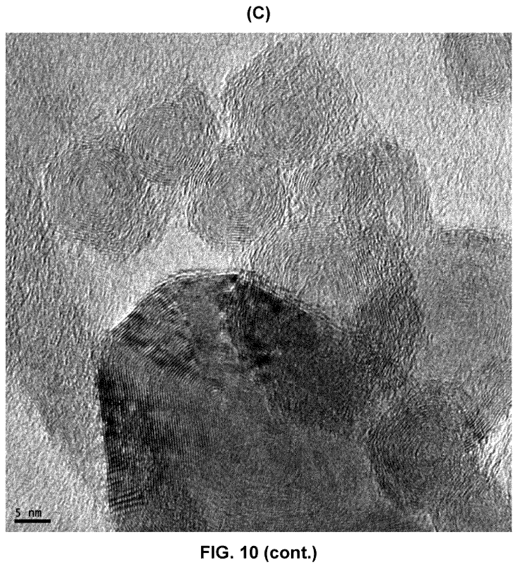

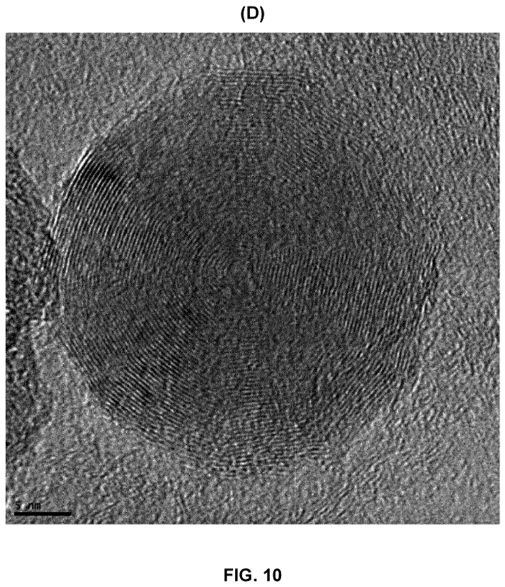

Via the use of HRTEM, the morphology of the carbon nanoforms produced after the acid treatment of the nanocomposite has also been characterized. This technique makes it possible to observe the formation of different carbon nanoforms such as nano-onions and nanotubes (FIG. 10B), and of carbon nano-onions in greater detail (FIG. 10C and 10D).

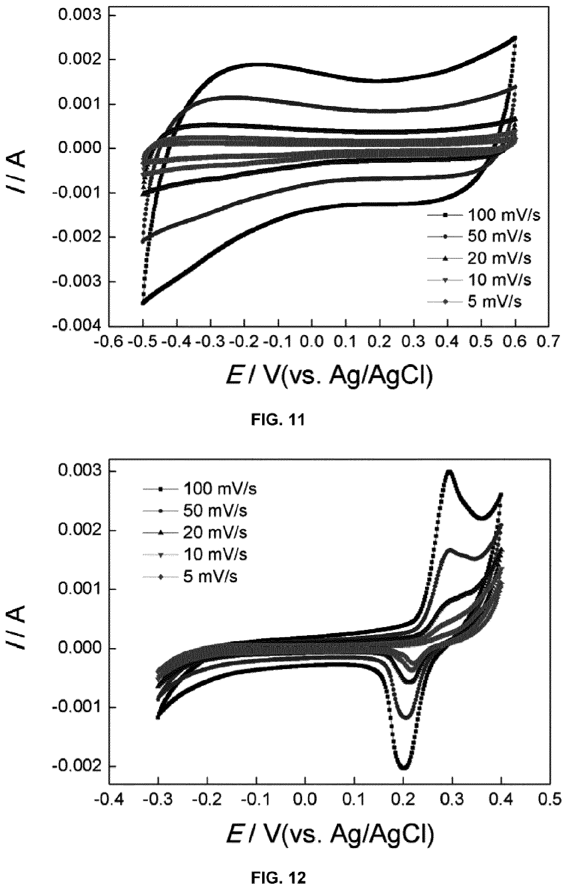

To demonstrate the supercapacitance properties of the materials produced, measurements of the current and voltage characteristics of the FeNi₃-carbon nanocomposite synthesized at 400 °C (Ni:Fe 2:1) and of the carbon matrix produced after the acid washing thereof, using cyclic voltamperometry (CV) were taken. For this analysis, each one of the powdered samples was mixed with carbon black and the polymer PTFE (polytetrafluoroethylene) in a 80:10:10 weight ratio and a small quantity of ethanol was added to the resulting mixture. The final mixture was deposited on a Pt electrode and air dried. Each electrode was prepared with a quantity of this mixture approximately equal to 1 mg/cm². A system consisting of a three-electrode cell was used to measure the FeNi₃-carbon nanocomposite synthesized at 400°C (Ni:Fe 2:1), and the carbon matrix produced after the acid washing thereof, using them as working electrodes. As counter electrode, a 4 cm² stainless steel plate was used and as reference electrode an Ag/AgCl electrode (3M KCI). The electrochemical behaviour of the electrodes was analysed using the three-electrode cell system with two types of electrolytes: 1M NaNO₃ and 6M KOH, at different scanning speeds between 5 and 100 mV/s. The CV curve wherein the electrolyte is NaNO₃ (FIG. 11) shows an appropriate rectangular morphology, with specific capacity of 50 F/g at 5 mV/s, indicating a similar behaviour to the carbon-based electrochemical supercapacitors. In the case wherein the electrolyte is KOH (FIG. 12), a drastic increase is observed in the specific capacity (213 F/g at 5 mV/s) with a substantial increase in the morphology of the voltamperogram, since the electrolyte is accessible to the redox centres originated by the nanoparticles of the metal alloy of FeNi₃. This behaviour demonstrates that the FeNi₃-carbon nanocomposites are appropriate for their use in supercapacitors.

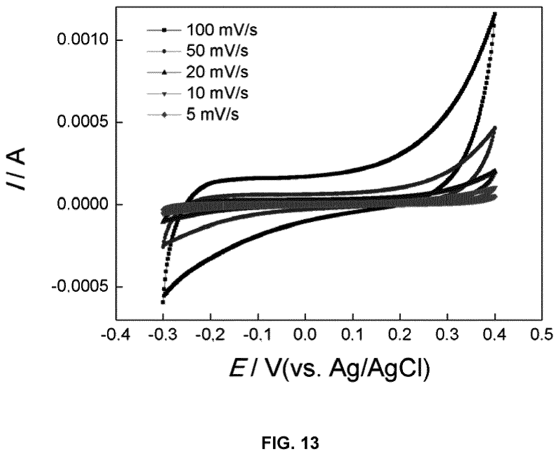

Measurements of the current and voltage characteristics of the carbon matrix produced after the acid washing of the initial nanocomposite at different scanning speeds in the KOH electrolyte were also taken (FIG.13). In this case, it demonstrates the great contribution of the metal nanoparticles of FeNi₃ to the Faradaic capacity. The carbon matrix has a supercapacitive behaviour with specific capacity value of 20 F/g at 5 mV/s. The CV curves shown demonstrate the energy storage characteristics of the nanocomposites synthesized and of the corresponding carbon matrices obtained. Additionally, it was observed that by the use of electrolytes that favour the Faradaic capacity, the specific capacity values are increased (from 50 F/g to 213 F/g in the case of the FeNi₃-carbon nanocomposite synthesized at 400 °C (Ni:Fe 2:1)).

To study the supercapacitance properties of the materials under high current densities, measurements of the power characteristics against time (galvanostatic measurements) (FIG. 14B, 14D and 14F) of the FeNi₃-carbon nanocomposites synthesized at 400, 650 and 900°C (Ni:Fe 3:1) have been taken. For this analysis, each one of the powdered samples was mixed with carbon black and the PTFE (polytetrafluoroethylene) polymer in a 80:10:10 weight ratio and a small quantity of ethanol was added to the resulting mixture. The final mixture was deposited on a porous nickel foam electrode, it was dried in an oven at 100°C during 12 h and later compressed in a press. Each electrode was prepared with a quantity of this mixture approximately equal to 1 mg/cm². A system consisting of a three-electrode cell was used to measure the FeNi₃-carbon nanocomposites synthesized at 400, 650 and 900°C (Ni:Fe 3:1), using them as working electrodes. As counter electrode, a 4 cm² stainless steel plate was used and as reference electrode an Ag/AgCl electrode (3M KCI). The electrochemical behaviour of the electrodes was analysed using the three-electrode cell system with a 6M KOH electrolyte, at different discharge currents between 10-30 A/g. Consequently, the CV curves were measured with a 6 M KOH type of electrode, at different scanning speeds between 5-100 mV/s (FIG. 14A, 14C and 14E). The CV curves obtained with the nickel foam electrode show a similar morphology to that obtained with the Pt electrode. Of the three materials studied, the FeNi₃-carbon nanocomposite synthesized at 900°C shows the greatest current response both in the CV and in the galvanostatic measurements, giving a value of 343 F/g at a current density value of 10 A/g.

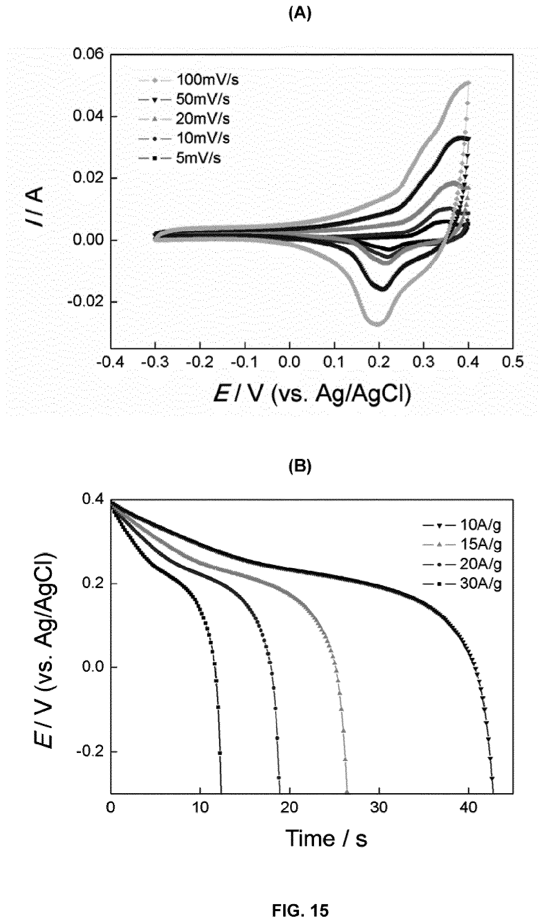

On the corresponding sample produced after the acid washing of the initial nanocomposite, FeNi₃-carbon synthesized at 400°C (Ni:Fe 3:1), the current and voltage characteristic measurements were take as well as the galvanostatic measurements (FIG. 15A and 15B), by the same process described in the previous paragraph. In this case a value was obtained of 607 F/g at 10 A/g, observing in this case that the Faradaic capacity plays a crucial role.

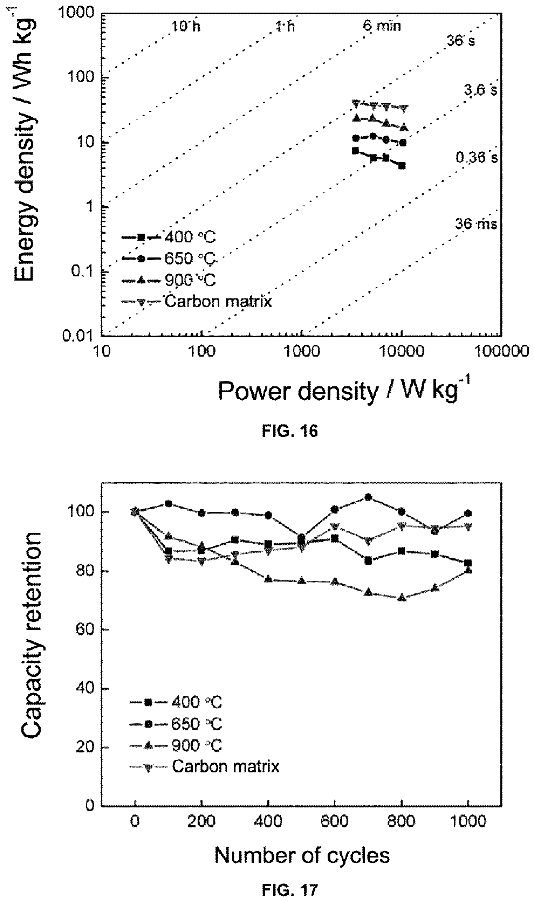

Additionally, Ragone charts (energy density vs.. power density) have been prepared of the FeNi₃-carbon nanocomposites synthesized at 400, 650 and 900°C (Ni:Fe 3:1) as well as the carbon matrix produced after the acid washing of the initial FeNi₃-carbon nanocomposite synthesized at 400°C (Ni:Fe 3:1)) (FIG. 16), observing high energy density level values, for example 16.9 Wh/Kg for the material synthesized at 900°C, with a corresponding power density of 10483.5 W/Kg. For the case of the carbon matrix produced after the acid washing of the nanocomposite synthesized at 400°C (NiFe 3:1) a value of 35 Wh/Kg has been measured with a power density of 10503 W/Kg.

This behaviour demonstrates that the FeNi₃-carbon nanocomposites are appropriate for their use in supercapacitors in high current conditions.

Another important capacity for the effective operation of the supercapacitors is their cyclability capacity (FIG. 17). Cyclic galvanostatic studies of charge and discharge have been performed. The experiments have been carried out with current densities of ± 20 A/g. Values always higher than 80 % of the original capacity have been obtained after 1000 cycles, showing the durability and stability of the materials studied.

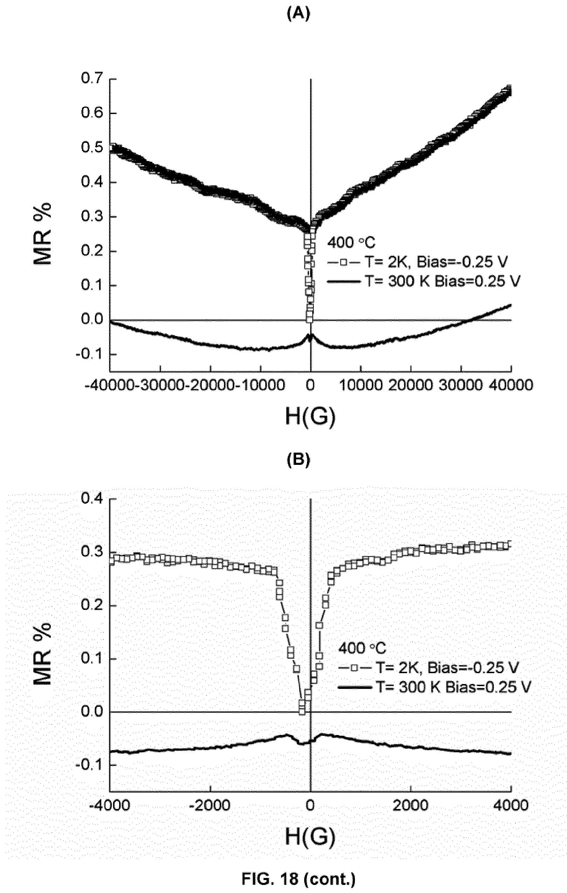

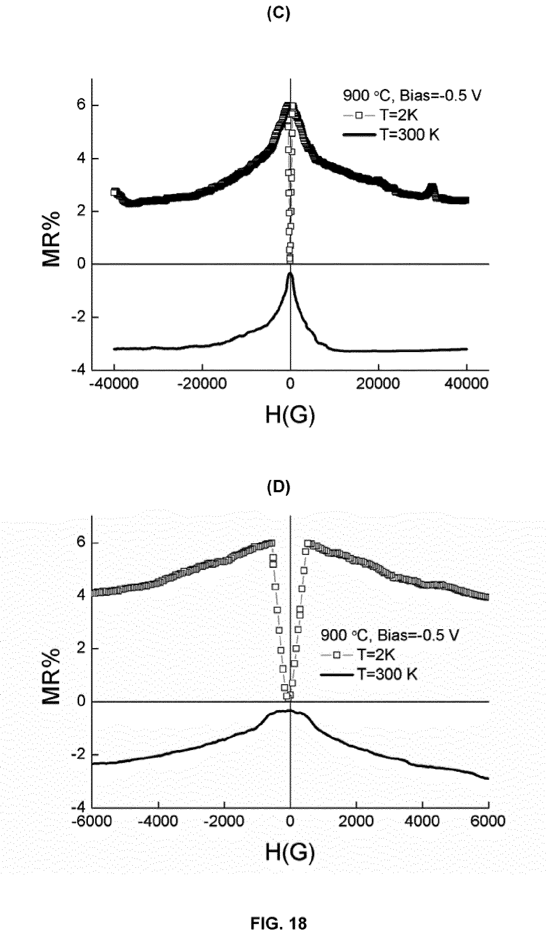

Finally, magnetoresistance measurements were taken in the FeNi₃-carbon nanocomposite synthesized at 400°C (Ni:Fe 2:1). Due to the presence of magnetic nanoparticles embedded in the matrix, which are in close contact with the graphitized carbon, which is an electricity conductor, the nanocomposite has electrical conductivity even until the lowest temperature studied (2 K), showing magnetoresistance. The nanocomposite produced at 400°C has a negative magnetoresistance of 1% at 300 K (FIG.18A). The nanocomposite produced by calcination at 900 °C has a negative magnetoresistance of 10 % at 300 K (FIG. 18C). For greater clarity, the figures corresponding to the magnetoresistance at low applied fields have been included (FIG. 18B and 18D). It is observed that there is a drastic change in the magnetoresistance and that it is dependent on the applied field at low temperatures (this field being very small), whereas at high temperatures it is not dependent on the field and the sign changes, which greatly facilitates the possibility of a real application. This is due to the presence of nanoparticles in close contact with the carbon matrix. Since this phenomenon occurs at room temperature and does not require high fields, it may be very useful as a sensor, for example.

## Claims

1. A nanocomposite comprising:
a) a layered hydroxide based graphitized carbon matrix and
b) nanoparticles of at least one metal in zero oxidation state embedded in said matrix, wherein the metal is selected from Ni, Fe, Co and any alloy thereof.

2. The nanocomposite according to claim 1, wherein the nanoparticles are an alloy of Ni and Fe, preferably with a FeNi₃ composition.

3. The nanocomposite according to any of claims 1 or 2, wherein the size of the metal nanoparticles is less than 15 nm.

4. Production process of the nanocomposite according to any of claims 1 to 3, comprising the following steps:
a) preparation of a layered hydroxide precursor from Ni salts, Fe salts, Co salts or any combinations thereof and a carbon compound which is selected from C₁-C₄₀ alkyl or C₅-C₂₄ aryl, which comprise at least one carboxylate group and/or a sulfonate group, wherein said carbon compound is substituted or not substituted by at least one group selected from amine, amide, hydroxy, alkoxy, carbonyl, halogen, cyano, acyl, alkoxycarbonyl, nitro, mercapto and alkylthio, and
b) calcination of the precursor produced in step (a) at a temperature of 400 to 900°C.

5. Process according to claim 4, wherein the layered hydroxide precursor is a layered hydroxide with layered double hydroxide (LDH) or layered simple hydroxide (LSH) structure.

6. Process according to any of claims 4 to 5, wherein the carbon compound is a C₄-C₂₀ alkyl, preferably adipate or sebacate.

7. Process according to any of claims 4 to 6, wherein in step (a) a combination of two salts selected from Ni salt, Fe salt and Co salt is used.

8. Process according to claim 7, wherein in step (a) a combination of a Ni salt and a Fe salt is used.

9. Process according to any of claims 4 to 8, wherein the calcination of step (b) is performed at a temperature of 400 °C.

10. Process to produce a porous material of graphitized carbon comprising the following steps:
a) production of the nanocomposite according to the process of any of claims 4-9; and
b) acid washing of the nanocomposite produced in step a).

11. Use of a nanocomposite according to any of claims 1 to 3, as magnetoresistant material.

12. Use according to claim 11, for the manufacturing of one of the following products: inductor, electronic device, storage support, giant magnetoresistant sensor and drug-delivery agent.

13. Use of a nanocomposite according to any of claims 1 to 3, as supercapacitor.

14. Use according to claim 13, for the manufacturing of one of the following products: electrochemical cell and nanoreactor.

15. Electronic or electrical component comprising the nanocomposite according to any of claims 1 to 3.

## Patentansprüche

1. Nanokomposit, umfassend:
a) eine geschichtete graphitierte Kohlenstoffmatrix auf Hydroxidbasis und
b) Nanopartikel aus mindestens einem Metall in Null-Oxidationsstufe, die in die Matrix eingebettet sind, wobei das Metall aus Ni, Fe, Co und einer beliebigen Legierung davon ausgewählt ist.

2. Nanokomposit nach Anspruch 1, wobei die Nanopartikel eine Legierung aus Ni und Fe sind, vorzugsweise mit einer FeNi₃-Zusammensetzung.

3. Nanokomposit nach einem der Ansprüche 1 oder 2, wobei die Größe der Metallnanopartikel weniger als 15 nm beträgt.

4. Herstellungsverfahren des Nanokomposits nach einem der Ansprüche 1 bis 3, umfassend die folgenden Schritte:
a) Herstellung eines geschichteten Hydroxidvorläufers aus Ni-Salzen, Fe-Salzen, Co-Salzen oder beliebige Kombinationen davon und einer Kohlenstoffverbindung, die ausgewählt ist aus C₁-C₄₀-Alkyl oder C₅-C₂₄-Aryl, die mindestens eine Carboxylatgruppe und/oder eine Sulfonatgruppe umfasst, wobei die Kohlenstoffverbindung durch mindestens eine Gruppe substituiert oder nicht substituiert ist, die ausgewählt ist aus Amin, Amid, Hydroxy, Alkoxy, Carbonyl, Halogen, Cyano, Acyl, Alkoxycarbonyl, Nitro, Mercapto und Alkylthio und
b) Kalzinieren des in Schritt (a) hergestellten Vorläufers bei einer Temperatur von 400 bis 900°C.

5. Verfahren nach Anspruch 4, wobei der geschichtete Hydroxidvorläufer ein geschichtetes Hydroxid mit der Struktur eines geschichteten Doppelhydroxids (LDH) oder geschichteten Einfachhydroxids (LSH) ist.

6. Verfahren nach einem der Ansprüche 4 bis 5, wobei die Kohlenstoffverbindung ein C₄-C₂₀-Alkyl, vorzugsweise Adipat oder Sebacat, ist.

7. Verfahren nach einem der Ansprüche 4 bis 6, wobei in Schritt (a) eine Kombination aus zwei Salzen, ausgewählt aus Ni-Salz, Fe-Salz und Co-Salz, verwendet wird.

8. Verfahren nach Anspruch 7, wobei in Schritt (a) eine Kombination aus einem Ni-Salz und einem Fe-Salz verwendet wird.

9. Verfahren nach einem der Ansprüche 4 bis 8, wobei das Kalzinieren von Schritt (b) bei einer Temperatur von 400°C durchgeführt wird.

10. Verfahren zur Herstellung eines porösen Materials aus graphitiertem Kohlenstoff, umfassend die folgenden Schritte:
a) Herstellung des Nanokomposits nach dem Verfahren eines der Ansprüche 4-9; und
b) saure Wäsche des in Schritt a) hergestellten Nanokomposits.

11. Verwendung eines Nanokomposits nach einem der Ansprüche 1 bis 3 als magnetoresistives Material.

12. Verwendung nach Anspruch 11 zur Herstellung eines der folgenden Produkte: Induktor, elektronische Vorrichtung, Speicherträger, riesiger magnetoresistiver Sensor und Arzneiverabreichungsmittel.

13. Verwendung eines Nanokomposits nach einem der Ansprüche 1 bis 3 als Superkapazität.

14. Verwendung nach Anspruch 13 zur Herstellung eines der folgenden Produkte: elektrochemische Zelle und Nanoreaktor.

15. Elektronisches oder elektrisches Bauteil, umfassend das Nanokomposit nach einem der Ansprüche 1 bis 3.

## Revendications

1. Nanocomposite comprenant :
a) une matrice de carbone graphitisée à base d'hydroxyde stratifié et
b) des nanoparticules d'au moins un métal à un état d'oxydation de zéro incorporées dans ladite matrice, dans lequel le métal est choisi parmi Ni, Fe, Co et tout alliage de ses derniers.

2. Nanocomposite selon la revendication 1, dans lequel les nanoparticules sont un alliage de Ni et Fe, de préférence avec une composition FeNi₃.

3. Nanocomposite selon l'une quelconque des revendications 1 ou 2, dans lequel la taille des nanoparticules de métal est inférieure à 15 nm.

4. Procédé de production du nanocomposite selon l'une quelconque des revendications 1 à 3, comprenant les étapes suivantes :
a) préparation d'un précurseur d'hydroxyde stratifié à partir de sels de Ni, de sels de Fe, de sels de Co ou toute combinaison de ces derniers et un composé de carbone qui est choisi parmi l'alkyle en C₁-C₄₀ ou l'aryle en C₅-C24, qui comprennent au moins un groupe carboxylate et/ou un groupe sulfonate, dans lequel ledit composé de carbone est substitué ou non substitué par au moins un groupe choisi parmi l'amine, l'amide, l'hydroxy, l'alcoxy, le carbonyle, l'halogène, le cyano, l'acyle, l'alcoxycarbonyle, le nitro, le mercapto et l'alkylthio, et
b) la calcination du précurseur produit à l'étape (a) à une température de 400 à 900 ºC.

5. Procédé selon la revendication 4, dans lequel le précurseur d'hydroxyde stratifié est un hydroxyde stratifié avec un hydroxyde double stratifié (HDS) ou structure d'hydroxyde simple stratifié (HSS).

6. Procédé selon l'une quelconque des revendications 4 à 5, dans lequel le composé de carbone est un alkyle en C4-C20, de préférence adipate ou sébacate.

7. Procédé selon l'une quelconque des revendications 4 à 6, dans lequel à l'étape (a) une combinaison de deux sels choisis parmi le sel Ni, le sel Fe et le sel Co est utilisée.

8. Procédé selon la revendication 7, dans lequel à l'étape (a) une combinaison d'un sel Ni et d'un sel Fe est utilisée.

9. Procédé selon l'une quelconque des revendications 4 à 8, dans lequel la calcination de l'étape (b) est réalisée à une température de 400 °C.

10. Procédé pour produire un matériau poreux de carbone graphitisé comprenant les étapes suivantes :
a) production du nanocomposite selon le procédé de l'une quelconque des revendications 4-9 ; et
b) le lavage à l'acide du nanocomposite produit à l'étape a).

11. Utilisation d'un nanocomposite selon l'une quelconque des revendications 1 à 3, comme matériau magnétorésistant.

12. Utilisation selon la revendication 11, pour la fabrication de l'un des produits suivants : inducteur, dispositif électronique, support de stockage, capteur magnétorésistant géant et agent d'administration de médicaments.

13. Utilisation d'un nanocomposite selon l'une quelconque des revendications 1 à 3, comme supercondensateur.

14. Utilisation selon la revendication 13, pour la fabrication de l'un des produits suivants : cellule électrochimique et nanoréacteur.

15. Composé électronique ou électrique selon l'une quelconque des revendications 1 à 3.
